# EUROPEAN PATENT SPECIFICATION

(11) **EP 0 400 533 B1**
(45) Date of publication and mention of the grant of the patent: **25.08.1993**
(21) Application number: 90110071.9
(22) Date of filing: 28.05.1990
(51) Int. Cl.: B23B 31/16, B23B 31/14

(54) **A self-centring chuck with balanced jaws**
Selbstzentrierendes Futter mit balancierenden Spannbacken
Mandrin autocentrant avec des mors balancés

(30) Priority: 30.05.1989 IT 6741589
(43) Date of publication of application: 05.12.1990
(73) Proprietor: MARIO PINTO S.p.A., 10135 Torino (IT)
(72) Inventor: Berardo, Giuseppe, I-10137 Torino (IT)
(74) Representative: Saconney, Piero

(56) References cited:
- DE-A- 2 611 923
- DE-A- 3 231 536
- FR-A- 2 425 909
- SU-A- 656 745
- US-A- 1 711 787
- US-A- 2 422 785
- US-A- 2 921 796
- PATENT ABSTRACTS OF JAPAN, vol. 4, no. 23 (M-93), 26th February 1980, page 21 M 93; & JP-A-54 159 785 (HOWA KOGYO K.K.) 17-12-1979
- IDEM

## Description

The present invention relates to a self-centring chuck for machine tools, of the type comprising a plurality of false jaws movable radially in a body of the chuck across its end face, and means for causing the simultaneous radial movement of the false jaws, in which each false jaw has an associated compensating mass mounted for radial sliding in the body of the chuck and tending to compensate for the centrifugal force to which the false jaw is subject during the rotation of the chuck, each compensating mass being connected to the respective false jaw by means of a two-armed lever articulated about an axis tangential to a circle about the axis of rotation of the chuck.

A self-centring chuck of this type is known from JP-A-54 159 785. Known self-centring chucks of this type have problems in gripping the workpiece with sufficient force to ensure that it is clamped securely without being deformed, particularly when they are intended to grip thin annular pieces.

In general, an increase in the number of contact points by which the workpiece is gripped reduces the extent to which the piece is deformed. However, in a self-centring chuck, it is pointless to increase the number of false jaws - to which the jaws that grip the piece are fixed - in order to increase the number of contact points since, because of the tolerance in the shape and size of the workpiece and the chuck, the contact with the surface of the piece is established by only three jaws (in fact, a rigid body has three degrees of freedom) whilst the other jaws only come into contact with the workpiece after the first three have deformed it to a certain extend.

One known solution which tends to reduce the aforementioned problem consists of the use of a self-centering chuck with three false jaws on each of which is mounted a rocker arm articulated about an axis parallel to the axis of rotation of the chuck and carrying at its ends a pair of jaws for gripping the workpiece. This solution enables the number of contact points on the surface of the workpiece to be increased, but the forces applied to the piece by the jaws are directed along a chord rather than radially (which would involve the minimum deformation of the piece) and this results in defects in the shape of the finished piece, particularly, as stated, in the case of thin annular pieces.

The U.S. patent 2,921,796 shows a solution which enables to increase the number of contact points by which the workpiece is gripped without causing deformations of the workpiece. In this solution the false jaws are connected to each other in pairs by means of two-armed levers articulated around respective pins which are carried by driving members movable radially in the body of the chuck. The movement of each driving member causes the movement of the two false jaws associated to the driving member. Since the moving direction of the driving member is angularly offset with respect to the moving direction of the associated false jaws, a relevant part of the force transmitted from the driving member to the false jaws acts on the guides of the false jaws and does not contribute to the gripping of the workpiece. Furthermore, the driving member does not reduce the effects of the centrifugal force which acts on the jaws and on the false jaws during operation, on the contrary the driving member further aggravates said effects since the centrifugal force which acts on the driving member is additional to the one which acts on the jaws and on the false jaws.

The object of the present invention is to provide a self-centring chuck of the type defined at the beginning of the present description which does not have the disadvantages mentioned above.

According to the present invention, this object is achieved by a self-centring chuck of the type specified above, in which the two-armed levers are interconnected in pairs of adjacent levers by means of rocker arms which pivot about axes parallel to the axis of the rotation of the chuck and carry the articulation pins of two adjacent levers.

As will be understood better from the description with reference to the drawings, this concept ensures that all the jaws come into engagement with the piece simultaneously.

Further characteristics and advantages of the present invention will become clear from the detailed description which follows with reference to the appended drawings, provided by way of non-limiting example, in which:

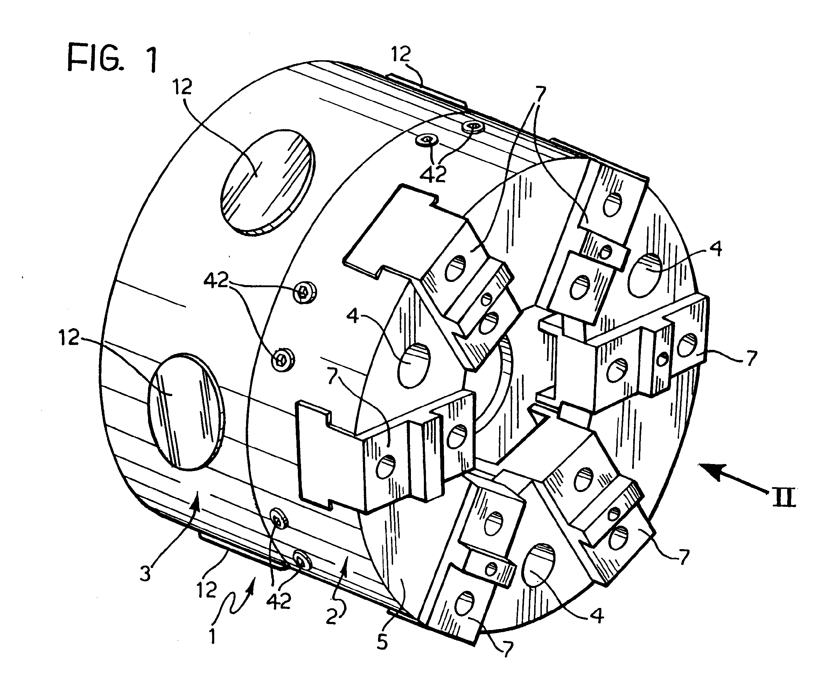

Figure 1 is a perspective view of a self-centring chuck according to the present invention,
Figure 2 is a front elevational view taken on the arrow II of Figure 1,
Figure 3 is a section taken on the line III-III of Figure 2,
Figures 4 and 5 are sections taken on the lines IV-IV and V-V of Figure 3, respectively,
Figure 6 is an exploded perspective view of the self-centring chuck of Figure 1,
Figure 7 is an exploded perspective view of the kinematic transmission mechanisms of the self-centring chuck of Figure 6,
Figure 8 is a section corresponding to that shown in Figure 3, relating to a different configuration of use of a chuck according to the invention, and
Figure 9 is a section taken on the line IX-IX of Figure 8.

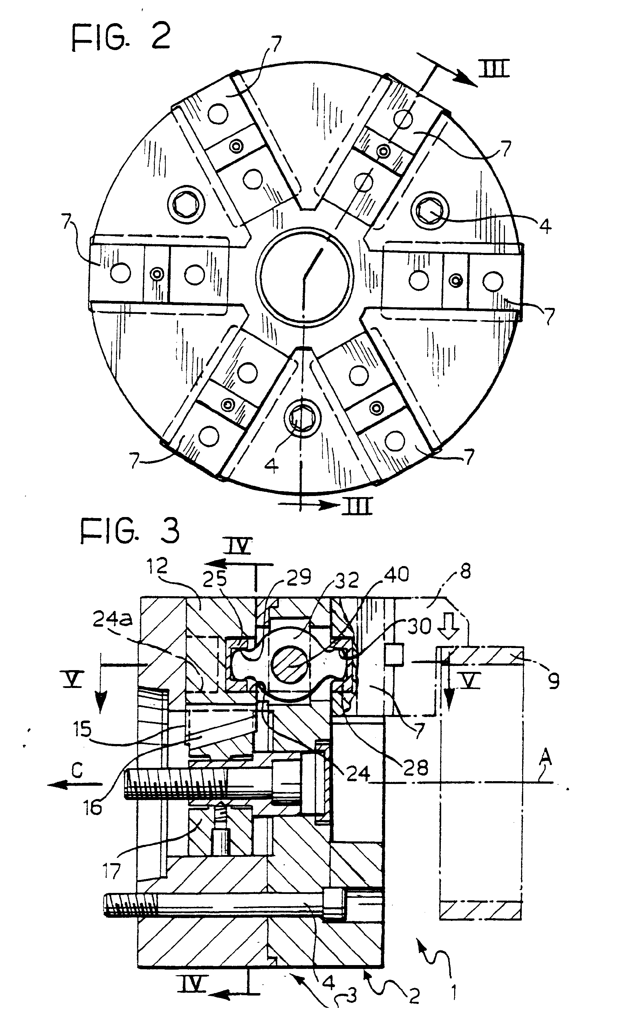

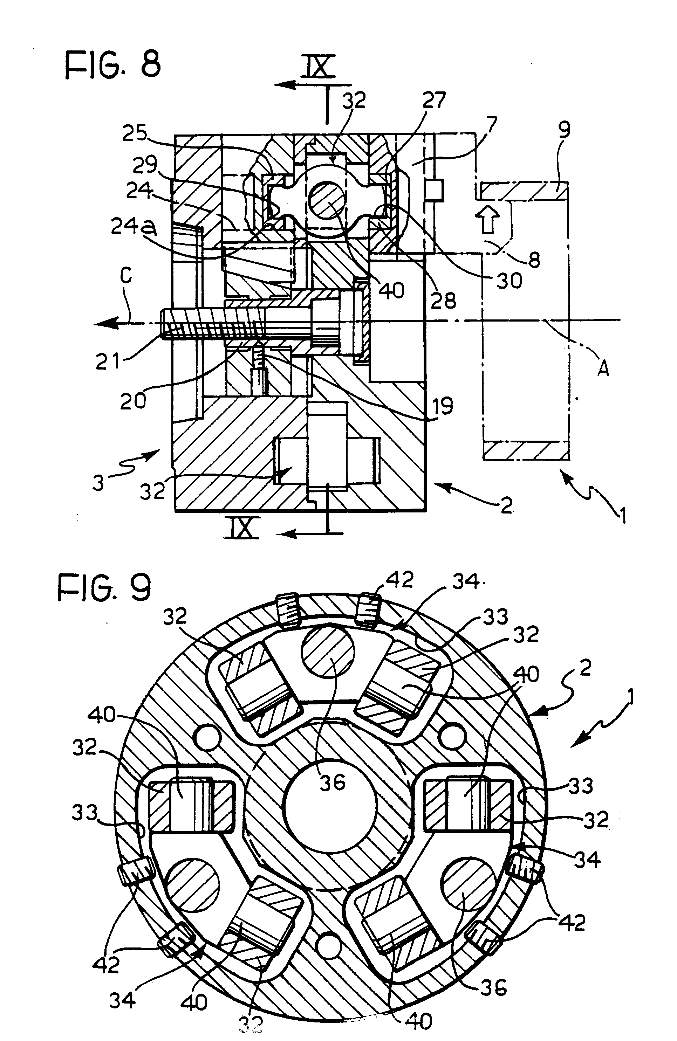

With reference to the drawings, a self-centring chuck for a machine tool is indicated 1 and includes a first hollow cylindrical body 2 fixed to a second hollow cylindrical body 3 by means of axial bolts 4. Six radial sliding seats are formed in the end face 5 of the body 2 and a false jaw 7 is slidable radially in each in the usual manner. As can be seen in Figures 3 and 8, a jaw 8 for gripping the workpiece 9 is fixed to each false jaw 7 in a known manner.

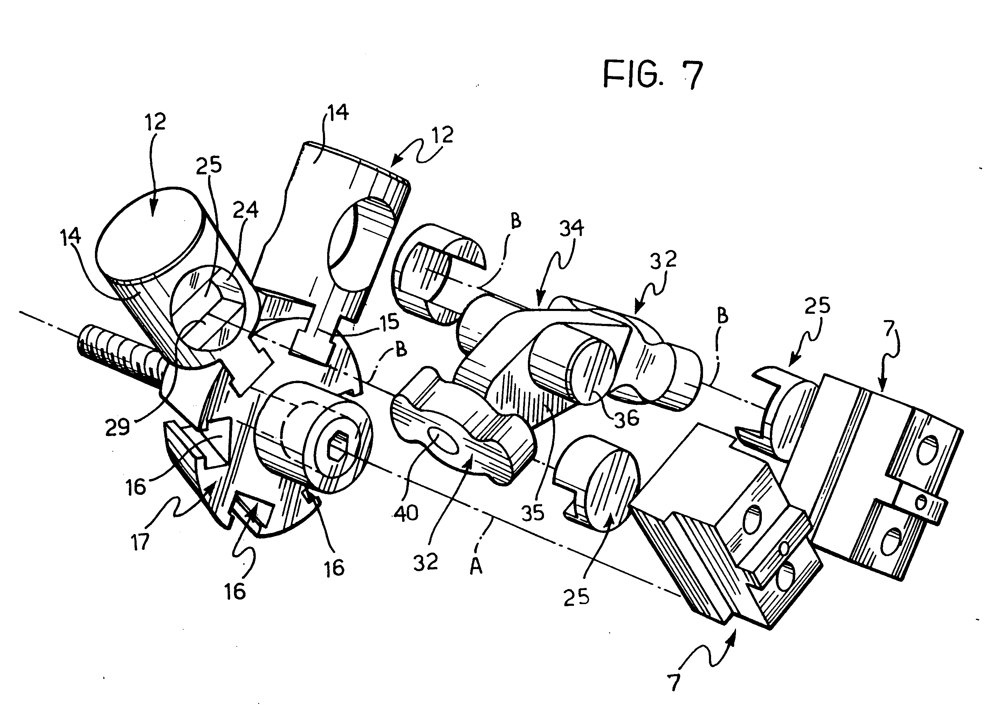

Six radial seats 11 are formed in the second body 3 and a compensating mass 12 associated with a respective false jaw 7 is slidably mounted in each. As can be seen in Figure 7, each compensating mass 12 is constituted by a cylindrical body 14 the radially inner end of which has a T-shaped heel 15 that engages a seat 16 of corresponding profile formed in a drive bush 17. In a known manner, the heels 15 and their corresponding seats 16 are inclined towards the axis of rotation A of the chuck 1 so that a movement of the drive bush 17 along the axis of rotation A results in a corresponding radial displacement of the compensating masses 12. As shown in Figures 3 and 8, the drive bush 17 is screwed onto a shaft 20 and is provided with a set screw 19. The shaft 20 has a threaded shank 21 for connection to a fluid actuator (not shown) carried by the machine tool. As can be seen from a comparison of Figures 3 and 8, the drive bush 17 can be mounted on the shaft 20 in two different operating configurations; in the first configuration, shown in Figure 3, the seats 16 are inclined towards the rear end of the chuck 1 whilst, in the second working configuration, the drive bush 17 is turned through 180° from the configuration shown in Figure 3 and the seats 16 are inclined towards the front end of the chuck 1.

As can be seen in Figure 7, a cylindrical seat 24 is formed in each compensating mass 12 and a cylindrical element 25 is mounted rotatably therein so as to be freely pivotable about an axis B parallel to the axis of rotation A of the chuck 1. As shown in broken outline in Figure 3 and 8, a second cylindrical cavity 24a is also formed in each compensating mass 12 symmetrically relative to the cavity 24 which houses the cylindrical element 25, and its function will become clear from the following description.

As can be seen in Figures 3 and 8, a cylindrical cavity 27 is also formed in each false jaw 7 and a cylindrical element 28 is mounted rotatably therein in a similar manner to that described above.

The cylindrical elements 25 and 28 have respective recesses 29, 30 which are engaged by the ends of two-armed levers 32 which connect each false jaw 7 to the respective compensating mass 12. As is known, the aforementioned connection between the false jaws 7 and the respective compensating masses 12 compensates for the effects of the centrifugal force to which the false jaws 7 are subject during the rotation of the chuck 1.

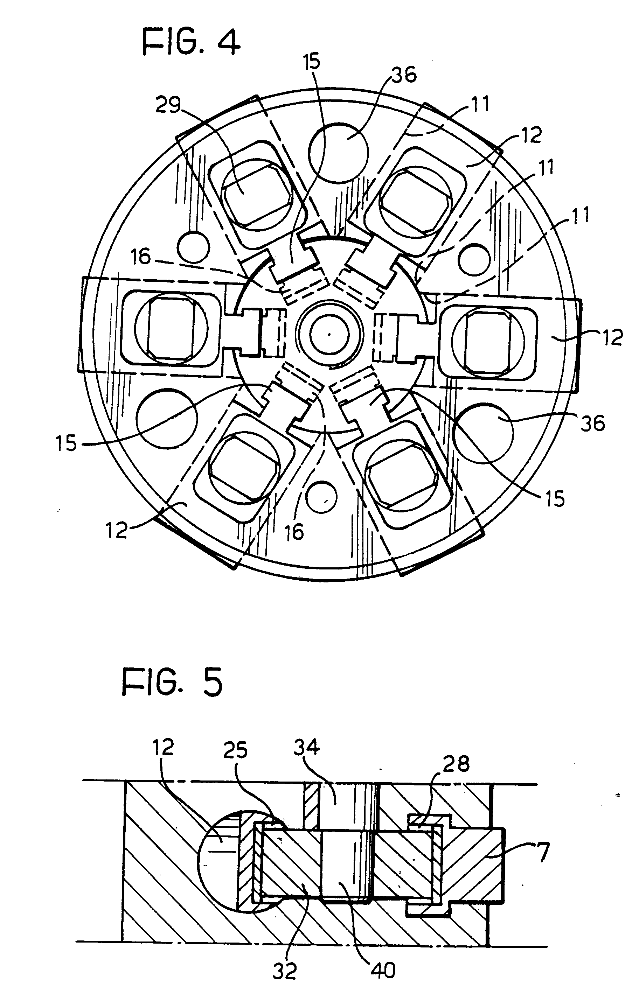

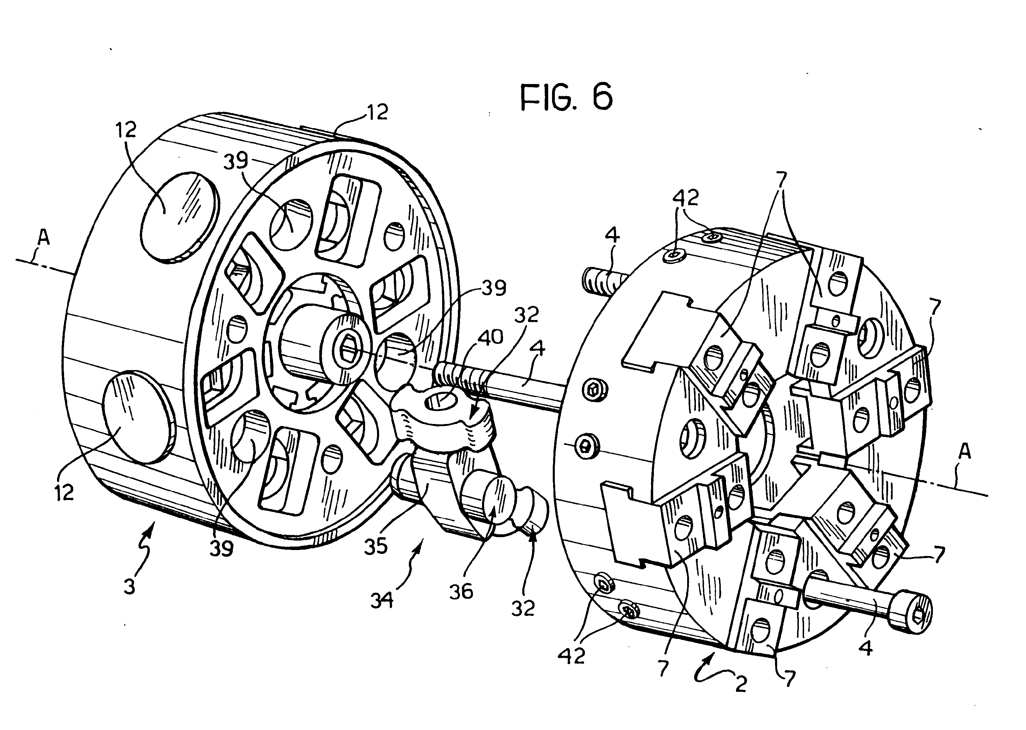

With reference to Figures 4, 6, 7 and 9, the two-armed levers 32 are interconnected in pairs of adjacent levers by means of rocker arms 34 which can pivot freely in cavities 33 formed in the body 2 of the chuck 1. Each rocker arm 34 comprises and angular body 35 whose central portion carries a pin 36 which extends parallel to the axis of rotation A of the chuck 1. The ends of the pins 36 are supported for rotation in respective holes 39 formed in the first and second bodies 2, 3 respectively. The body 35 of each rocker arm 34 has pin-shaped ends 40 on which the two-armed levers 32 are pivotably mounted. As can be seen in Figures 6, 7 and 9, the pivot axes of the levers 32 are tangential to a circle about the axis of rotation A of the chuck.

The self-centring chuck described above operates as follows.

When the chuck 1 is in the first operating configuration shown in Figure 3, a force applied to the drive bush 17 by the shaft 20 in the direction of the arrow C of Figure 3 causes the compensating masses 12 to slide radially outwardly. The false jaws 7 are consequently driven by the compensating masses 12, by means of the two-armed levers 32, and simultaneously move inwardly. As a result of the tolerances in the shape and size of both the workpiece 9 and the chuck 1, only three jaws 8 usually come into contact with the surface of the piece 9 at the same time. If traction continues to be applied to the shaft 20 after this first contact, the remaining three jaws 8 are also brought into contact with the surface of the piece 9 as a result of the pivoting of the rocker arms 34 about their axes, but without the three jaws which established the initial contact deforming the piece 9. If, in particular cases, the automatic balancing of the false jaws 7 is to be limited or prevented, it is possible to turn screws 42 (see Figure 9) which are engaged in respective threaded holes in the body 2 and cooperate with the peripheral surfaces of the rocker arms 34 so as to limit or prevent the pivoting of the latter.

In order to grip a tubular piece form the inside with the self-centring chuck 1 in the configuration shown in Figure 3, it would be necessary to apply a force in the opposite direction from that indicated by the arrow C in Figure 3, but this excludes the possibility of producing a self-centring chuck which is also self-clamping. In fact, in order to be able to clamp the workpiece against rods (not shown) carried by the machine tool and extending axially through the chuck 1, the clamping force applied to the chuck 1 must be directed towards the machine tool. In order also to be able to clamp the workpiece when it is gripped from the inside, with the chuck according to the present invention, it is sufficient to turn the drive bush 17 and the compensating masses 12 around from the configuration shown in Figure 3. After it has been turned around, the chuck 1 is in the configuration shown in Figure 8. In this second operating configuration, a force applied to the drive bush 17 in the direction of the arrow C of Figure 8 causes a radial inward movement of the compensating masses 12 and a consequent outward movement of the false jaws 7, enabling the piece 9 to be gripped on its internal surface.

## Claims

1. A self-centring chuck for machine tools, of the type comprising a plurality of false jaws (7) movable radially in a body (2, 3) of the chuck (1) across its end face, and means (15, 16) for causing the simultaneous radial movement of the false jaws (7), in which each false jaw (7) has an associated compensating mass (12) mounted for radial sliding in the body (2, 3) of the chuck (1) and tending to compensate for the centrifugal force to which the false jaw (7) is subject during the rotation of the chuck (1), each compensating mass (12) being connected to the respective false jaw (7) by means of a two-armed lever (32) articulated about an axis tangential to a circle about the axis of rotation (A) of the chuck (1),
characterised in that the two-armed levers (32) are interconnected in pairs of adjacent levers by means of rocker arms (34) which pivot about axes (36) parallel to the axis of rotation (A) of the chuck (1) and carry the articulation pins (40) of two adjacent levers (32).

2. A self-centring chuck according to Claim 1, characterised in that each false jaw (7) and the compensating mass (12) associated therewith carry respective cylindrical elements (25, 28) mounted for rotation about an axis (B) parallel to the axis of rotation (A) of the chuck (1), the cylindrical elements (25, 28) having respective recesses (24, 30) which are engaged by the free ends of the arms of the lever (32) connecting the compensating mass (12) and the false jaw (7).

3. A self-centring chuck according to Claim 1, characterised in that the rocker arms (32) are free to pivot in cavities (33) formed in a first body (2) carrying the false jaws (7), the first body (2) being fixed to a second body (3) having radial guide seats (11) in which the compensating masses (12) are slidably mounted.

4. A self-centring chuck according to Claim 3, characterised in that each rocker arm (34) comprises an angular body (35) having shaped ends on which the two-armed levers (32) are pivotably mounted and carrying a central pin (36) whose ends are supported by the first and second bodies (2, 3) respectively.

5. A self-centring chuck according to Claim 4, characterised in that the ends (40) of the angular body (35) are pin-shaped, and in that the levers (32) have corresponding cylindrical cavities for the mounting of the levers (32) on the pin-shaped ends (40).

6. A self-centring chuck according to any one of the preceding claims, characterised in that a plurality of radial threaded holes are formed in the peripheral surface of the first body (2) and are engaged by screws (42) which cooperate with the body (35) of the rocker arm (34) so as to limit or prevent the pivoting of the latter.

7. A self-centring chuck according to Claim 1, characterised in that the radially inner end of each compensating mass (12) has a heel (5) which is inclined to the axis of rotation (A) of the chuck (1) and is mounted slidably in a corresponding inclined seat (16) formed in a bush (17) fixed to a drive shaft (20) movable along the axis of rotation (A) of the chuck (1).

8. A self-centring chuck according to Claim 7, characterised in that the compensating masses (12) and the drive bush (17) can be mounted in a first operating configuration in which the heels (15) and the corresponding seats (16) are inclined towards the rear end of the chuck (1), and in a second operating configuration in which the compensating masses 12 and the drive bush (17) are turned around with respect to the position assumed in the first operating configuration and in which the heels (15) and the corresponding seats (16) are inclined towards the front end of the chuck (1).

## Patentansprüche

1. Selbstzentrierende Einspannvorrichtung für Werkzeugmaschinen des Typs, welcher eine Mehrzahl von Einsatzbacken (7) umfaßt, die radial in einem Körper (2, 3) der Einspannvorrichtung (1) quer über dessen Stirnfläche bewegbar sind, sowie Mittel (15, 16) zum Verursachen der gleichzeitigen Radialbewegung der Einsatzbacken (7), bei welcher jeder Einsatzbacken (7) eine zugeordnete, kompensierende Masse (12) aufweist, welche zur radialen Verschiebung in dem Körper (2, 3) der Einspannvorrichtung (1) angebracht ist, und welche dazu neigt, die Zentrifugalkraft, welcher der Einsatzbacken (7) während der Rotation der Einspannvorrichtung (1) ausgesetzt ist, zu kompensieren, wobei jede kompensierende Masse (12) mit dem entsprechenden Einsatzbacken (7) mittels eines zweiarmigen Hebels (32) verbunden ist, welcher um eine zu einem Kreis um die Drehachse (A) der Einspannvorrichtung (1) tangentiale Achse angelenkt ist, **dadurch gekennzeichnet,** daß die zweiarmigen Hebel (32) paarweise nebeneinanderliegend durch Kipphebel (34) miteinander verbunden sind, welche um zur Rotationsachse (A) der Einspannvorrichtung (1) parallele Achsen (36) schwenken und die Anlenkstifte (40) zweier nebeneinanderliegender Hebel (32) tragen.

2. Selbstzentrierende Einspannvorrichtung nach Anspruch 1, **dadurch gekennzeichnet,** daß jeder Einsatzbacken (7) und die diesem zugeordnete kompensierende Masse (12) jeweilige zylindrische Elemente (25, 28) tragen, welche zur Rotation um eine Achse (B) parallel zur Rotationsachse (A) der Einspannvorrichtung (1) angebracht sind, wobei die zylindrischen Elemente (25, 28) jeweilige Ausnehmungen (24, 30) aufweisen, die mit den freien Enden der Arme des Hebels (32) eingreifen, um die kompensierende Masse (12) und den Einsatzbacken (7) zu verbinden.

3. Selbstzentrierende Einspannvorrichtung nach Anspruch 1, **dadurch gekennzeichnet,** daß die Kipphebel (32) in Vertiefungen (33) frei schwenkbar sind, welche in einem die Einsatzbacken (7) tragenden ersten Körper (2) gebildet sind, wobei der erste Körper (2) an einem zweiten Körper (3) mit radialen Führungssitzen (11), in welchen die kompensierenden Massen (12) verschiebbar angebracht sind, befestigt ist.

4. Selbstzentrierende Einspannvorrichtung nach Anspruch 3, **dadurch gekennzeichnet,**daß jeder Kipphebel (34) einen Winkelkörper (35) mit geformten Enden umfaßt, auf welchen die zweiarmigen Hebel (32) schwenkbar angebracht sind, und welcher einen zentralen Stift (36) trägt, dessen Enden jeweils durch die ersten und zweiten Körper (2, 3) gehalten sind.

5. Selbstzentrierende Einspannvorrichtung nach Anspruch 4, **dadurch gekennzeichnet,** daß die Enden (40) des Winkelkörpers (35) stiftförmig ausgebildet sind, und daß die Hebel (32) entsprechende zylindrische Vertiefungen zum Anbringen der Hebel (32) auf den stiftförmigen Enden (40) aufweisen.

6. Selbstzentrierende Einspannvorrichtung nach einem der vorhergehenden Ansprüche, **dadurch gekennzeichnet,** daß eine Mehrzahl radialer Gewindelöcher in der Umfangsoberfläche des ersten Körpers (2) gebildet ist, in welche Schrauben (42) eingreifen, die mit dem Körper (35) des Kipphebels (34) zum Begrenzen oder Verhindern der Schwenkbewegung des letzteren zusammenwirken.

7. Selbstzentrierende Einspannvorrichtung nach Anspruch 1, **dadurch gekennzeichnet,**daß das radial innere Ende jeder kompensierenden Masse (12) einen Absatz (15) aufweist, welcher zur Rotationsachse (A) der Einspannvorrichtung (1) geneigt und in einem entsprechend geneigten Sitz (16) verschiebbar angebracht ist, welcher in einer an einer entlang der Rotationsachse (A) der Einspannvorrichtung (1) bewegbaren Antriebswelle (20) festgelegten Buchse (17) gebildet ist.

8. Selbstzentrierende Einspannvorrichtung nach Anspruch 7, **dadurch gekennzeichnet,** daß die kompensierenden Massen (12) und die Antriebsbuchse (17) in einer ersten Betriebsanordnung angebracht sein können, in welcher die Absätze (15) und die entsprechenden Sitze (16) in Richtung auf das hintere Ende der Einspannvorrichtung (1) hin geneigt sind, sowie in einer zweiten Betriebsanordnung, in welcher die kompensierenden Massen (12) und die Antriebsbuchse (17) bezüglich der in der ersten Betriebsanordnung eingenommenen Stellung umgedreht sind, und in welcher die Absätze (15) und die entsprechenden Sitze (16) in Richtung auf das vordere Ende der Einspannvorrichtung (1) hin geneigt sind.

## Revendications

1. Mandrin autocentrant pour des machines-outils, du type comprenant une pluralité de faux mors (7) susceptible de se déplacer radialement dans un corps (2, 3) du mandrin (1), sur sa face d'extrémité et des moyens (15, 16) pour provoquer le mouvement radial simultané des faux mors (7), dans lequel chaque faux mors (7) présente une masse de compensation (12) associée montée pour coulisser radialement dans le corps (2, 3) du mandrin (1) et se tendre pour compenser la force centrifuge à laquelle est soumis le faux mors (7) durant la rotation du mandrin (1), chaque masse de compensation (12) étant reliée au faux mors (7) correspondant au moyen d'un levier à deux bras (32) articulé autour d'un axe tangent à un cercle situé autour de l'axe de rotation (A) du mandrin (1),
caractérisé en ce que ce que les leviers à deux bras (32) sont reliés entre eux en formant des couples de leviers adjacents, au moyen de bras oscillants (34) qui pivotent autour d'axes (36) parallèles à l'axe de rotation (A) du mandrin (1) et supportant les tiges d'articulation (40) de deux leviers (32) adjacents.

2. Mandrin autocentrant selon la revendication 1, caractérisé en ce que chaque faux mors (7) et la masse de compensation (12) lui étant associée supportent des éléments cylindriques (25, 28) correspondants montés pour tourner autour d'un axe (B) parallèle à l'axe de rotation (A) du mandrin (1), les éléments cylindriques (25, 28) présentant des cavités (24, 30) correspondantes qui sont pénétrées par les extrémités libres des bras du levier (32) reliant la masse de compensation (12) au faux mors (7).

3. Mandrin autocentrant selon la revendication 1, caractérisé en ce que les bras oscillants (32) sont libres de pivoter dans des cavités (33) formées dans un premier corps (2) supportant les deux mors (7), le premier corps (2) étant fixé à un second corps (3) présentant de sièges de guide radial (11) dans lesquels les masses de compensation (12) sont montées coulissantes.

4. Mandrin autocentrant selon la revendication 3, caractérisé en ce que chaque bras oscillant (34) comprend un corps angulaire (35) présentant des extrémités profilées sur lesquelles les leviers à deux bras (32) sont montés pivotants et supportant une tige centrale (36) dont les extrémités sont respectivement supportées par les premier et second corps (2, 3).

5. Mandrin autocentrant selon la revendication 4, caractérisé en ce que les extrémités (40) du corps angulaire (35) sont réalisées en forme de tige et en ce que les leviers (32) présentent des cavités cylindriques correspondantes pour le montage des leviers (32) sur les extrémités en forme de tige (40).

6. Mandrin autocentrant selon l'une quelconque des revendications précédentes, caractérisé en ce qu'une pluralité de trous radiaux taraudés sont formés dans la surface périphérique du premier corps (2) et sont mis en contact par des vis (42) qui coopèrent avec le corps (35) du bras oscillant (34), de manière à limiter ou empêcher le pivotement de ce dernier.

7. Mandrin autocentrant selon la revendication 1, caractérisé en ce que l'extrémité radialement intérieure de chaque masse de compensation (12) présente un talon (15) qui est incliné par rapport à l'axe de rotation (A) du mandrin (1) et est monté coulissant dans un siège incliné (16) correspondant, formé dans une couille (17) fixée à un arbre d'entraînement (20) susceptible de se déplacer le long de l'axe de rotation (A) du mandrin (1).

8. Mandrin autocentrant selon la revendication 7, caractérisé en ce que les masses de compensation (12) et la douille d'entraînement (17) peuvent être montées en formant une première configuration fonctionnelle, dans laquelle les talons (15) et les sièges (16) correspondants sont inclinés par rapport à l'extrémité arrière du mandrin (1) et une seconde configuration fonctionnelle, dans laquelle les masses de compensation (12) et la douille d'entraînement (17) sont tournées par rapport à la position prise dans la première configuration fonctionnelle et dans laquelle les talons (15) et les sièges (16) correspondants sont inclinés par rapport à l'extrémité avant du mandrin (1).
